# EUROPEAN PATENT APPLICATION

(11) **EP 1 688 396 A1**
(43) Date of publication of application: **09.08.2006**
(21) Application number: 04818938.5
(22) Date of filing: 17.11.2004
(51) Int. Cl.: C03B 37/018

(54) **OPTICAL FIBER BASE BODY AND METHOD OF MANUFACTURING THE SAME**

(30) Priority: 19.11.2003 JP 2003389848
(71) Applicant: Shin-Etsu Chemical Co., Ltd., Chiyoda-ku, Tokyo 100-0004 (JP)
(72) Inventor: Yoshida, Makoto, c/o Shin-Etsu Chemical Co., Ltd., Ibaraki 3140116 (JP)
(74) Representative: Pfenning, Meinig & Partner GbR
(86) International application number: PCT/JP2004/017105
(87) International publication number: WO 2005/049515

(57) **Abstract**

The present invention has the purpose of providing optical fiber base material having an even ratio of core to clad in the longitudinal direction thereof and method of easily manufacturing the same. In the method of manufacturing the optical fiber base material using the outside vapor deposition (OVD) process, a burner is relatively reciprocated against and along an initial material and deposits glass fine particles on the initial material. In the above method, the relative reciprocation is stopped at the returning positions in a certain period, preferably, in no less than 3 seconds and no more than 60 seconds.

## Description

### TECHNICAL FIELD

The present invention relates to optical fiber base material, which is precursor of optical fiber, and methods of manufacturing the same.

In the designated states which accept the incorporation by reference, the present application incorporates the contents of the following application by reference to be a part of the description of the present application.

Japanese patent application No. 2003-389848, filed on November 19, 2003.

### BACKGROUND ART

There has been proposed various methods to manufacture optical fiber base materials. The outside vapor deposition (OVD) process, one of such various methods, is generally used. In the OVD process, an initial material is rotated, a burner is reciprocated along the initial material or the initial material is reciprocated relative to the burner, the initial material, and glass fine particles generated in the burner flame is deposited on the initial material and vitrified to form a soot preform, then the soot preform is dehydrated in an electrical furnace and sintered to produce a transparent glass. According to the OVD process, an optical fiber base material having a substantially desired refractive index and also having large diameter can be produced with mass production.

The method for producing optical fiber base material, which has an even ratio of core to clad after vitrified is disclosed, for example, in patent document 1.

The method for changing the gas quantity in the vicinity of both the returning positions of the reciprocation is disclosed, for example, in patent document 2.
Patent document 1: Japanese laid-open patent No. 1997-118538
Patent document 2: Japanese laid-open patent No. 2000-159533

### DISCLOSURE OF THE INVENTION

### PROBLEMS TO BE SOLBED BY THE INVENTION

The method described in the patent document 1 employs the OVD process, in which the velocity of the relative reciprocation is varied along the longitudinal direction during the deposition, resulting ina transparent glass have an even ratio of core to clad after sintered and vitrified. According to the method, however, it is difficult to adjust the deposited amount at the returning positions because the gas quantity has to be adjusted while moving.

According to the method described in the patent document 2, for the purpose of preventing the soot preform from cracking and breaking, the gas quantity supplied, the velocity of the reciprocation, and the distance between the burner and the soot preform are changed for adjustment. Such factors must be adjusted while moving in the relative reciprocation, which also make it difficult to adjust the deposited amount at the returning positions.

In the OVD process, it is important that the glass fine particles are deposited so that the resulted the optical fiber base material after vitrified can have an even ratio of core to clad in the longitudinal direction all over the range of the relative reciprocation. The method, however, may decrease the yield rate because the fluctuation in deposited amount is larger in the vicinity of the returning positions of the relative reciprocation than the other positions, causing an uneven ratio of core to clad.

An object of the present invention is to provide optical fiber base material and methods for manufacturing the same, capable of easily producing the optical fiber base material having an even ratio of core to clad in the longitudinal direction thereof.

### MEANS FOR SOLVING THE PROBLEMS

The present inventors were dedicated to research for finding the solution to solve the above problems, which the relative reciprocation is stopped in a certain period at the returning positions, and the deposited amount is adjusted around the returning positions. These processes can provide the even ratio of core to clad in the longitudinal direction of the optical fiber base material after vitrified. The present invention was finally completed by setting the stopping period at the returning positions.

The present method of manufacturing optical fiber base material employs the OVD process, in which a burner is relatively reciprocated against and along an initial material to deposit glass fine particles on the initial material to make optical fiber base material. In the above method, while the burner and the initial material are relatively reciprocated, the relative reciprocation is stopped at the returning positions in a certain period, preferably, in no less than 3 seconds and no more than 60 seconds.

In the stopping period during the relative reciprocation, it is preferred that, related to the deposition condition, the amount of material gas is changed or increased. It is also preferred that one of the deposition period, the deposition weight, or the number of relative reciprocation is primarily set as a condition, and the stopping period during the relative reciprocation is changed continuously or step-by-step depending on the determined condition. The stopping period may be fixed during the production.

In the above method, if the deposition period increases, the stopping period of the burner may be longer. If the deposition weight increases, the stopping period may increase. If the number of reciprocation increases, the stopping period may also increase.

The above description of the present invention doesn't cite all the features of the present invention. The sub-combinations of these features may also be inventions.

### EFFECT OF THE INVENTION

According to the method of manufacturing optical fiber base material related to the present invention, the relative reciprocation stops at the returning positions in a certain period, preferably, in no less than 3 seconds and no more than 60 seconds so that the soot can be deposited evenly around the returning positions, and the ratio of core to clad of an optical fiber base material produced by vitrification can be even in the longitudinal direction.

### BRIEF DESCRIPTION OF THE DRAWINGS

Fig. 1 is a schematic view of an apparatus used for producing the optical fiber base material of the present invention.
Fig. 2 is a chart showing a variation pattern of the stopping period of the third embodiment. Description of reference numbers
   1 initial material
   2 burner used for deposition
   3 burner guide mechanism
   4 motor
   5 soot preform

### BEST MODE FOR CARRYING OUT THE INVENTION

The following description explains the present invention with embodiments. The embodiments described below do not limit the invention claimed herein. All of the combinations described on the embodiments are not essential to the solutions of the present invention.

The method of manufacturing optical fiber base material, which is related to the present invention, is precisely described below with referring to the drawings. The present invention doesn't be limited within such description and drawings.

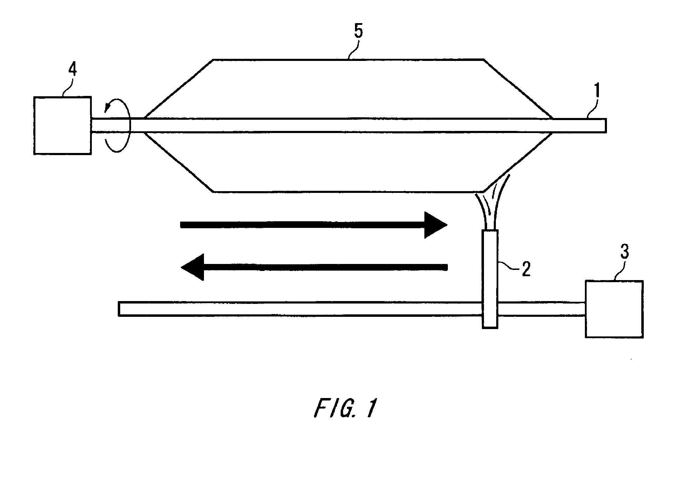

Fig. 1 shows an example of the apparatus used for producing the optical fiber base material of the present invention.

In the figure, the initial material includes a core, or a combination of a core and a part of clad. The initial material is supported and rotated around the rod by a substrate bearing member, which isn't drawn in the figure. The burners 2 used for deposition is set below the initial material, and can move laterally with the burner guide mechanics 3. Instead of moving the burner 2 during the deposition, another mechanics may be employed so that the initial material 1 can move in the longitudinal direction.

The description below is the method of manufacturing optical fiber base material, which relates to the present invention and uses such apparatus in the OVD process.

While the initial material 1 is rotated around the rod by the motor 4, the burner 2 used for deposition moves along the initial material 1 with the burner guide mechanics 3 and blows flame against the initial material.

For the burner 2 used for deposition, oxyhydrogen flame burners are often used. The oxyhydrogen flame burner sprays vapor of fiber material such as SiCl₄, and combustion gas, which contains hydrogen gas and oxygen gas. In the oxyhydrogen flame, glass fine particles or soot are generated by the flame hydrolysis reaction, and deposited on the initial material 1 to make a soot preform.

The present invention features that the burner 2 used for deposition, which is relatively reciprocated against and along the initial material 1, stops the relative reciprocation in a certain period at the returning positions, and during stopping the supplied amount of the combustion gas and/or fiber material is changed to vary the deposited amount of soot at the returning positions of the respective reciprocating movement.

Around the returning positions of the relative reciprocation, the deposited amount of soot varies compared with the other points. In anticipation of the amount of change, the supplied amount of the combustion gas and/or fiber material is changed. This can allow optical fiber base material to be free from warts, cracks, flakes of the deposition, dents and bumps, and have an even ratio of core to clad in the longitudinal direction thereof.

The precise research concluded that the stopping period at the returning positions is no less than 3 seconds and not more than 60 seconds. This time period allows the deposited amount around the returning positions to be adjusted to make the optical fiber base material having an even ratio of core to clad in the whole length after vitrified. If the stopping period is less than 3 seconds, it is too short to vary the deposited amount. If the stopping period is more than 60 seconds, the variation of the deposited amount causes several problems such as the soot density, warts, cracks, flakes of the deposition, dents, and bumps.

The stopping period at the returning positions doesn't have to be fixed. It is effective for varying the deposited amount that the stopping period is changed continuously or step-by-step depending on some factors such as the deposition period, the deposition weight, and the number of relative reciprocation. In the above process, if the diameter of the optical fiber base material increases, it is preferred to extend the certain stopping period of the burner. If the deposition period increases, the certain stopping period of the burner may be extended. If the deposition weight increases, the certain stopping period may also be extended. If the burner reciprocates more often, the certain stopping period may also be extended.

The following is the more detailed description of the present invention with some embodiments, which cannot limit the criteria of the present invention.

### Embodiment 1

Using the apparatus shown in Fig. 1 and employing the OVD process, an optical fiber was produced.

For the initial material 1, a quartz glass rod having the outer diameter of 30 mm and the length of 1.5 m was used. The glass rod was mounted on a substrate bearing mechanics, not shown, and rotated at 30 rpm. The burner 2 used for deposition was supplied flaming gas, carrier gas, and glass material gas. The flaming gas used for one glass rod included oxygen gas of 18 litter/min, hydrogen gas of 45 litter/min, and was supplied from a raw material feeder, not shown. For the carrier gas, 3 litter/min oxygen gas was supplied from the raw material feeder. For the glass material gas, SiCl₄ of 1.8 litter/min was supplied.

The traversing motion was stopped in 0 to 70 seconds at the returning positions of the relative reciprocation, and in the stopping period soot was deposited with the same gas supplying condition applied during the relative reciprocation. The resulted amount of change in the ratio of core to clad at the returning positions is shown in Table 1. In the stopping period of 0 to 30 seconds, the longer the stopping period was, the smaller the amount of change in the ratio of core to clad. At the 30-second stopping period, the ratio was minimum value. At 60-second stopping period, the amount of change was larger because the deposited amount was too large. At 70-second stopping period, the density was too large, and the deposition had warts to be broken. The amounts of change in the ratio of core to clad shown in Table 1 are the differences between the maximum value and the minimum value of the ratio of core to clad of the optical fiber base material after vitrified.

**Table 1**

| Stopping period (sec) | 0 | 3 | 10 | 30 | 60 | 70 |
|---|---|---|---|---|---|---|
| Amount of change in ratio of core to clad | 0.0098 | 0.0082 | 0.0051 | 0.0022 | 0.0044 | Broken |

### Embodiment 2

Using the apparatus shown in Fig. 1, an optical fiber base material was made with the same method of the first embodiment.

For the initial material 1, a quartz glass rod having the outer diameter of 30 mm and the length of 1.5 m was used. The glass rod was mounted on the motor 4, rotated at 30 rpm, and deposited soot with the same gas supplying condition of the first embodiment.

In the present embodiment, the stopping period at the returning positions was 10 seconds. The gas supplying conditions in the stopping period were; the same gas supplying condition applied during the traversing motion; the first trail, in which the 75 percent combustion gas containing hydrogen gas and oxygen gas was used; and the second test, in which the 125 percent fiber material, or SiCl₄, was used.

The decrease of the soot density allowed the target area to increase, causing the increase in the deposition efficiency. This resulted that the deposition amount at the ends of the rod, and the change in the ratio of core to clad was moderated.

**Table 2**

| Amount of supplied gas in stopping period | Same as traversing | Test 1 | Test 2 |
|---|---|---|---|
| Ratio of core to clad | 0.0051 | 0.0044 | 0.0026 |

### Embodiment 3

Using the apparatus shown in Fig. 1, an optical fiber base material was produced with the same method of the first embodiment.

For the initial material 1, a quartz glass rod having the outer diameter of 30 mm and the length of 1.5 m was used. The glass rod was mounted on the motor 4, rotated at 30 rpm, and deposited soot on the same gas supplying condition of the first embodiment.

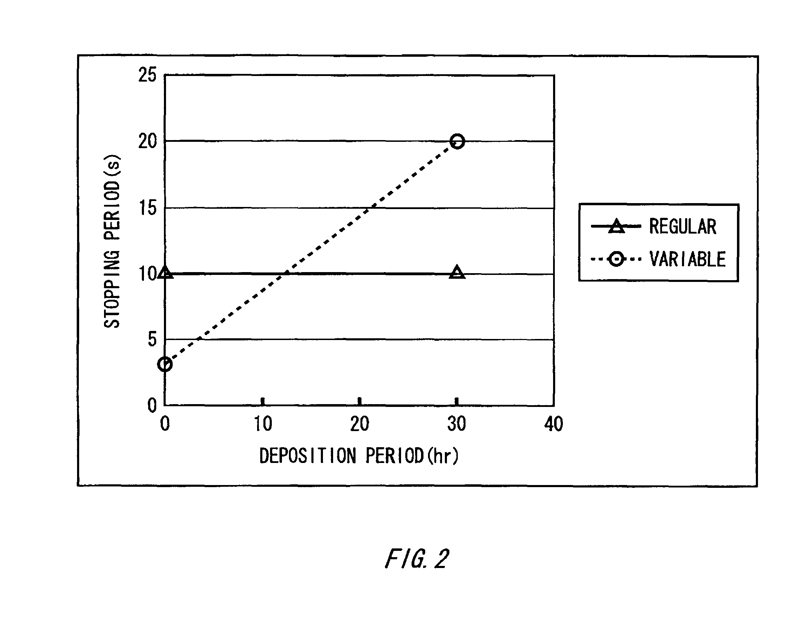

In the present embodiment, as shown in Fig. 2, the article made with the constant 10-second stopping period, was compared with the article made with the variable stopping period as the deposition proceeding.

The article made with the variable stopping period stopped longer in the last half of the deposition when the deposition target area was larger. As shown in Fig. 3, the variable stopping period made the deposited amount larger than the constant 10-second stopping period, which causes to moderate the change in the ratio of core to clad.

**Table 3**

| Stopping period (sec) | Constant | Variable |
|---|---|---|
| Ratio of core to clad | 0.0051 | 0.0023 |

The above description explaining the present invention with the embodiments does not limit the technical scope of the invention to the above description of the embodiments. It is apparent for those in the art that various modifications or improvements can be made to the embodiments described above. It is also apparent from what we claim that other embodiments with such modifications or improvements are included in the technical scope of the present invention.

### INDUSTEST APPLICABILITY

The optical fiber base material having an even ratio of core to clad in the longitudinal direction can be provided.

## Claims

1. A method of manufacturing optical fiber base material employing the OVD process, in which a burner is relatively reciprocated against and along an initial material to deposit glass fine particles on said initial material to produce an optical fiber base material, comprising steps of: relatively reciprocating said burner and said initial material; and stopping said relative reciprocation in a predetermined period at returning positions thereof.

2. The method of manufacturing the optical fiber base material according to claim 1, wherein the stopping period is no less than 3 seconds and no more than 60 seconds.

3. The method of manufacturing the optical fiber base material according to claim 1 or 2, wherein in the stopping period during the relative reciprocation, combustion gas is decreased.

4. The method of manufacturing the optical fiber base material according to one out of claims 1 to 3 wherein in the stopping period during the relative reciprocation, the amount of material gas is increased.

5. The method of manufacturing the optical fiber base material according to one out of claims 1 to 4, wherein one of the deposition period, the deposition weight, or the number of relative reciprocation is primarily set as a condition, and the stopping period during the relative reciprocation is changed continuously depending on said determined condition.

6. The method of manufacturing the optical fiber base material according to one out of claims 1 to 5, wherein one of the deposition period, the deposition weight, or the number of relative reciprocation is primarily set as a condition, and the stopping period during the relative reciprocation is changed step-by-step depending on said determined condition.

7. The method of manufacturing the optical fiber base material according to one out of claims 5 or 6, wherein if the diameter of said optical fiber base material increases, said certain period in which said burner stops is extended.

8. The method of manufacturing the optical fiber base material according to one out of claim 7, wherein if said deposition period increases, said certain period, in which said burner stops, is extended.

9. The method of manufacturing the optical fiber base material according to one out of claim 7, wherein if said deposition weight increases, said certain period, in which said burner stops, is extended.

10. The method of manufacturing the optical fiber base material according to one out of claim 7, wherein if the number of relative reciprocation increases, said certain period, in which said burner stops, is extended.

11. Optical fiber base material which is made in one of the methods of manufacturing optical fiber base material according to one out of claims 1 to 10.
